Europäisches Patentamt

(19) **European Patent Office**

**Office européen des brevets**

(11) Publication number: **0 004 058**
**B1**

(12) **EUROPEAN PATENT SPECIFICATION**

(45) Date of publication of patent specification: **30.12.81**

(21) Application number: **79100657.0**

(22) Date of filing: **05.03.79**

(51) Int. Cl.³: **F 24 J 3/00, F 28 D 17/00**
**//F24C15/34, F24B1/18,**
**F24B7/02, F24C1/14,**
**F24C7/00, F24C13/00,**
**F24H7/00**

(54) Heat storage device.

(30) Priority: **06.03.78 US 883651**

(43) Date of publication of application:
**19.09.79 Bulletin 79/19**

(45) Publication of the grant of the European patent:
**30.12.81 Bulletin 81/52**

(84) Designated Contracting States:
**BE CH DE FR GB IT LU NL SE**

(56) References cited:
**DE - A - 2 707 374**
**DE - A - 2 707 825**
**FR - A - 2 279 029**
**US - A - 2 429 748**
**US - A - 4 050 626**

(73) Proprietor: **Van der Maas, Robert E.**
**2020 Northeast 127th Street**
**Seattle Washington 98125 (US),**

(72) Inventor: **Van der Maas, Robert E.**
**2020 Northeast 127th Street**
**Seattle Washington 98125 (US)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P. Jakob, Dr.**
**rer. nat. G. Bezold Maximilianstrasse 43**
**D-8000 München 22 (DE)**

Courier Press, Leamington Spa, England.

Heat storage device

The invention relates to a heat storage device, in particular for a fireplace, comprising a heat storage material having a high specific heat arranged in heat conductive relationship with at least one source of heat, in particular a firebox of the fireplace and/or its exhaust conduits. Such a device is known from the DE-A-2 707 825.

Heat storage devices of this kind make it possible to store heat produced over a relatively short period of time and to subsequently utilize that heat as desired over a relatively long period of time.

From FR-A-2 279 029, a fireplace is known having a firebox surrounded by a water jacket serving as the heat storage device. The water in the jacket serves as the heat storage medium. The heat is transferred to the room by means of a plenum with air outlets, said plenum being in contact with the water in the jacket. Water is not a particularly good heat storage medium; however, its heat storage capacity is limited by its low boiling point. The provision of a water jacket surrounding a firebox calls for a complicated mechanical structure incorporating numerous seals. These seals tend to have leakage problems due to heat dilation of the mechanical parts.

DE-A-27 07 374 and US-A-4 050 622 disclose heating systems for homes, in which a fireplace is surrounded by water tubes. The water in these tubes is either fed directly into radiators of a central heating system, or into a hot water storage tank, from which the radiators are supplied. The disadvantages of systems of that type are similar to those described above. They are only useful in combination with an arrangement of radiators. In addition, it is difficult to store heat in such a system over a longer period of time, because the specific heat of water is not very high and the water thus must be stored in a well-insulated tank or reservoir.

Finally, it is generally known to provide stoves with a heat storage capacity by surrounding the firebox by a mass of bricks usually set in fired clay. These stoves are difficult to produce. Only specialized artisans can still build them.

The technical problem to be solved by this invention is to provide a heat storage device of the type described above, which can store heat over a long period of time and which is easy to produce and install.

The invention solving this problem is characterized in that the heat storage material is enclosed in a plurality of piled-up bags made of a material having good heat conductive properties.

The heat storage device according to the invention consists of a number of individual heat storing elements, each comprising a bag or other enclosure having good heat conducting properties and enclosing a material having a high specific heat. These heat storage elements can be mass-produced on an industrial scale and will thus be very inexpensive. They can easily be piled up around or above the heat source or a conduit conducting the heat from a source, so that no skilled labor is required to assemble the device. The device is very simple mechanically and creates no sealing problems. It can be installed when a fireplace, stove or other heat source, like a solar system, is being built and it can also be installed later as an addition to an existing heat source. The bags conduct the heat quickly and without much loss to the heat storage material contained therein. The heat storage material being of high specific heat will efficiently store the heat over a long period of time and will only slowly dissipate it to where the heat is required.

Further advantageous features of the invention are covered by claims 2-8.

Ways of carrying out the invention are described in detail below with reference to the drawings, which illustrate applications of the heat storage device in connection with a fireplace and other heat sources. In the drawings,

Fig. 1 is a front elevational view of a fireplace provided with a heat storage device according to the invention,

Fig. 2 is a cross-sectional view of the fireplace taken along the line II—II of Fig. 1,

Fig. 3 is a front elevational view of the fireplace of Fig. 1 showing an electrical heating element in association with the heat storage device according to the invention,

Fig. 4 is a cross-sectional view illustrating the heat exchanger of a hot water heating system embedded in the heat storage device,

Fig. 5 is a cross-sectional view illustrating the heat exchanger of a solar heating system embedded in the heat storage device according to the invention,

Fig. 6 is a front elevational view of another fireplace provided with a heat storage device according to the invention, and,

Fig. 7 is a cross-sectional view of the fireplace of Fig. 6 taken along the line 7—7.

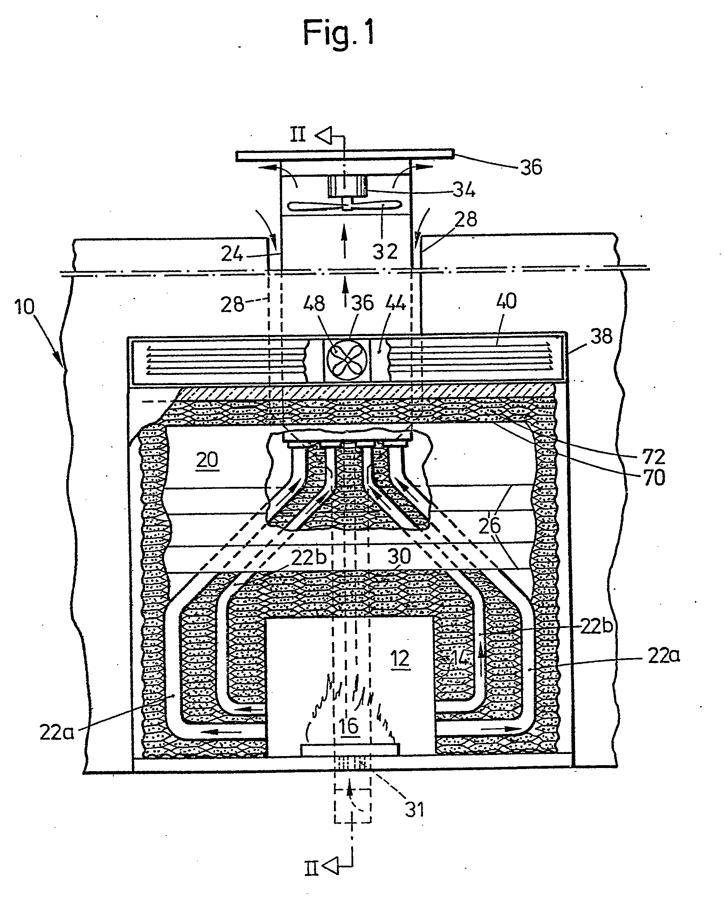

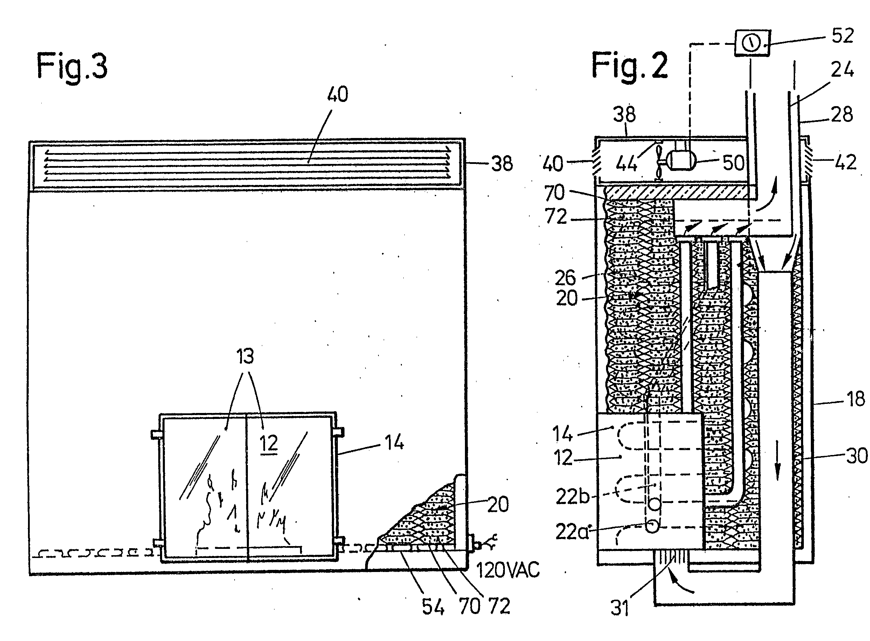

The fireplace as illustrated in Figs. 1 and 2 includes a combustion area 12 surrounded by a firebox 14 which may be fabricated by welding sheets of heavy steel plate in an appropriate manner. The front opening of the firebox 14 is preferably covered by conventional glass fireplace doors 13 as illustrated in Fig. 3. The firebox 14 is surrounded by a heat storage device according to the invention. It comprises an enclosure 18 having an open top which contains a heat storage means 20. This means consists of a large number of bags 70 containing a material 72 having a high specific heat such as sand or gravel. The bags 70 are of a conductive material such as metallic foil which may be anodized or otherwise color treated to efficiently absorb heat and radiate it to the material 72. The sizes of the bags 70 may vary depending upon their position. For example, large size bags may be used to construct the floor, top and sides while smaller bags may be used internally. The enclosure 18 can be formed of a variety of materials, but one operative embodiment utilizes a layer of fire-clay slurry coating both sides of a metal lath framework. The metal lath framework is preferably welded to the firebox 14 before being coated with slurry. The inner surfaces of the enclosure are preferably covered with a heavy fibre insulative coating to prevent heat from escaping therethrough.

Exhaust gases from the burning fuel 16 flow from the combustion area 12 through a plurality of conduits 22 extending from the firebox 14 to a vertical exhaust outlet 24. The conduits 22 are of heat conducting material so that heat from the exhaust gases is transferred to the bags 70 and the storage material 72. The inside diameters of the conduits 22 are selected to equalize the flow of exhaust gases through the respective conduits 22. Thus, for example, the flow of exhaust gases through the upper conduits 22b would ordinarily be greater than the flow of exhaust gases through the lower conduits 22a, since the exhaust gases entering the upper conduit 22b are hotter and exhaust conduit 22b is shorter than conduit 22a. However, since conduit 22b has a smaller inside diameter than conduit 22a, the flow of exhaust gases through both pairs of conduits 22a,b are equal.

Combustion air is conveyed to the combustion area 12 through an inlet jacket 28 surrounding the exhaust outlet 24 and an inlet duct 30. The inlet duct 30 terminates in a grate 31 on the floor of the firebox 14. As combustion air flows through the inlet jacket 28 it absorbs heat from the exhaust gases in the exhaust outlet 24 so that the combustion air is pre-warmed before entering the combustion area 12. Additionally, the inlet jacket thoroughly isolates the exhaust outlet 24 from the surrounding support structure. Since the conduits 22 intersect the firebox 14 on the horizontal, and because of the additional drag created by the relatively narrow conduits 22, an exhaust fan 32 driven by a conventional motor 34 is provided to create a draft through the combustion area 12. The fan 32, motor 34, exhaust outlet 24 and inlet jacket 28 are covered by a small roof 36 to shield these components from moisture.

Heat stored in the material 72 contained in the bags 70 slowly dissipates through a rectangular plenum 38 covering the enclosure 18. As best illustrated in Fig. 2, the plenum is formed by a pair of louvered sidewalls 40, 42 which are separated from each other by a baffle 44. The baffle 44 contains an opening therethrough, and a fan 48 driven by a motor 50 is mounted in the opening 46 to convey air into the plenum 38 through louver 40 where it is heated and out louver 42. If desired, the motor 50 may be actuated by a conventional thermostat 52 when the temperature in the surrounding area falls below a preset value.

In operation, fuel 16 such as wood, coal, oil or gas is burned in the firebox 14. As the exhaust gases flow through the conduits 22 and exhaust outlet 24 heat is transferred to the heat storage material 72 in the bags 70 by the conduits 22 and the heat conducting bags 70. The heat storage means 20 absorbs the peak temperature from the burning fuel 16 while storing the heat for subsequent use. At the same time, combustion air entering the firebox 14 through the inlet jacket 28 and duct 30 is pre-warmed. When the fire in the firebox 14 is subsequently extinguished, the heat stored in the material 72 is slowly dissipated by air flowing through the plenum 38 when the motor 50 is actuated. Of course, the motor 50 may also be actuated when fuel 16 is being burned in the firebox 14.

The inventive heat storage device may also be utilized to consume electrical power during off-peak periods for subsequent utilization of the electrically produced heat during peak power periods as illustrated in Fig. 3. For this purpose, an electrical heating coil 54 of conventional variety is embedded in the storage means 20 along the bottom of the enclosure 18. During periods of low power consumption when power is relatively inexpensive the heating element 54 may be utilized to heat the material 72 in the bags 70. Thereafter, the heat produced by the heating element 54 during off-peak power periods is subsequently dissipated during peak-hour periods when power is relatively expensive.

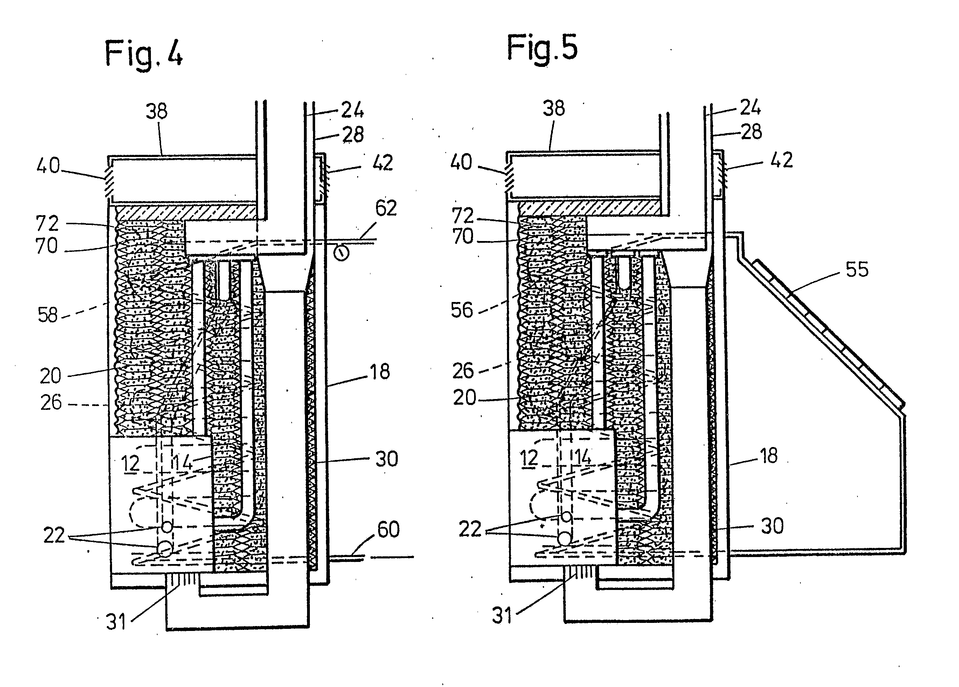

The heat storage device may also be used to store heat generated by a conventional solar heat collector as illustrated in Fig. 5. The heat collector 55 is connected to a heat exchanger 56 which is embedded in the heat storage means 20 along the bottom of the enclosure 18 to supply heat to the material 72 during daylight hours. The heat stored in the material 72 is then utilized during the evening hours or on cloudy days.

Although the primary mechanism for removing heat stored in the material 72 is the plenum 38, the heat storage device may also be utilized to directly heat cold water in a hot water heating system. As illustrated in Fig. 4, a heat exchanger 58 is embedded in the storage means 20. One end of the heat exchanger 58 is connected to the cold water supply line 10 while the outlet is connected to the hot water distribution system 60, 62. Similarly, heat from a solar heat collector 55 may be transferred to the material 72 by a liquid recirculating through heat exchange tubes 56.

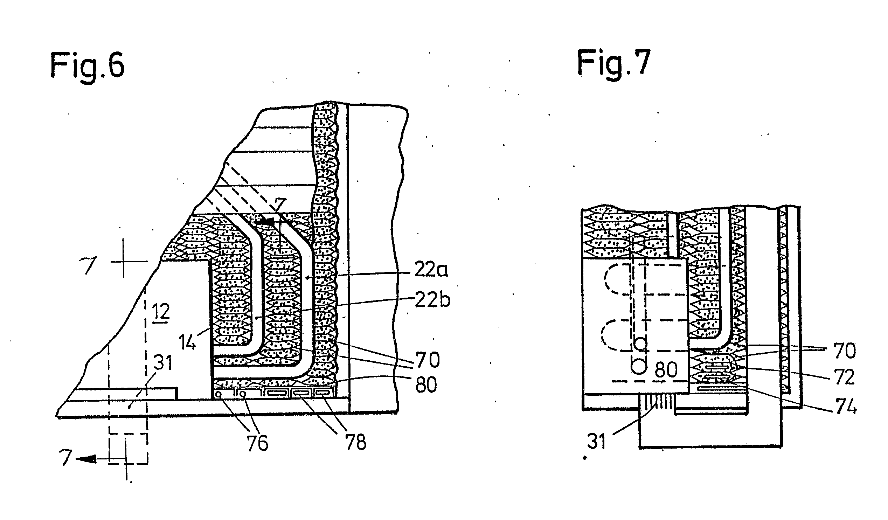

The embodiment shown in Figs. 6 and 7 is very similar to those illustrated in Figs. 1-5. The exception is that heating elements 76 corresponding to the heating coils 54 (Fig. 3) and heat exchanger tubes 78 corresponding to the tubes 56 (Fig. 5) and 58 (Fig. 4) are placed within metal tunnels 80 at the bottom of the fireplace. This construction facilitates replacement of the heating elements 76 and heat exchanger tubes 78 without removing the bags 70. As best illustrated in Fig. 7, heat-conducting honeycomb assemblies 74 may be inserted in the bags 70 with the material 72 to greatly improve the heat transfer characteristics from the bags 70 to the material 72.

The heat storage device of the present invention is thus capable of efficiently storing heat generated under optimum conditions for relatively slow utilization over a fairly long period of time.

### Claims

1. Heat storage device, in particular for a fireplace, comprising a heat storage material having a high specific heat arranged in heat conductive relationship with at least one source of heat, in particular a firebox of the fireplace and/or its exhaust conduits, characterized in that the heat storage material is enclosed in a plurality of piled-up bags (70) made of a material having good heat conductive properties.

2. Heat storage device according to claim 1, characterized in that the bags (70) are made of metallic foil.

3. Heat storage device according to claims 1 and 2, characterized in that the metallic foil is anodized or color treated to efficiently absorb and radiate heat.

4. Heat storage device according to at least one of the preceding claims, characterized in that heat distribution elements (74) are inserted in the bags (70) to enhance the heat transfer from the bags to the material (72) of high specific heat.

5. Heat storage device according to at least one of the preceding claims, associated with the firebox of a fireplace as a first source of heat, characterized in that at least one additional source of heat (76 resp. 55) is arranged in heat conductive relationship with the bags (70).

6. Heat storage device according to claim 5, characterized in that the additional source of heat is a set of electrical heating elements (76) and/or a solar heat collector (55) connected to the piled-up bags (70) by heat exchange tubes (78).

7. Heat storage device according to claim 6, characterized by a heat conductive support plate carrying the bags (70) and having elongated cavities (80) receiving the electrical heating elements (76) and/or heat exchanger tubes (78).

8. Heat storage device according to at least one of the preceding claims, characterized by a generally hollow plenum (38) and by air conveying means for causing air to flow through said plenum thereby removing heat from said bags.

### Revendications

1. Dispositif d'accumulation de chaleur, en particulier pour une cheminée, comprenant une matière d'accumulation de la chaleur ayant une chaleur spécifique élevée, disposée en relation de conduction de la chaleur avec au moins une source de chaleur, en particulier un foyer de la cheminée et/ou ses conduits d'évacuation, caractérisé en ce que la matière d'accumulation de la chaleur est renfermée dans plusieurs sacs empilés (70) réalisés en une matière ayant de bonnes propriétés de conduction de la chaleur.

2. Dispositif d'accumulation de chaleur selon la revendication 1, caractérisé en ce que les sacs (70) sont réalisés en mince feuille métallique.

3. Dispositif d'accumulation de la chaleur selon les revendications 1 et 2, caractérisé en ce que la mince feuille métallique est anodisée ou traitée en couleur afin d'absorber et de rayonner efficacement la chaleur.

4. Dispositif d'accumulation de chaleur selon au moins l'une des revendications précédentes, caractérisé en ce que des éléments (74) de distribution de la chaleur sont insérés dans les sacs (70) afin d'améliorer la transmission de la chaleur des sacs à la matière (72) à haute chaleur spécifique.

5. Dispositif d'accumulation de la chaleur selon au moins l'une des revendications précédentes, associé au foyer d'une cheminée comme première source de chaleur, caractérisé en ce qu'au moins une source supplémentaire de chaleur (76 correspondant à 55) est disposée en relation de conduction de la chaleur avec les sacs (70).

6. Dispositif d'accumulation de chaleur selon la revendication 5, caractérisé en ce que la source supplémentaire de chaleur est un groupe d'éléments chauffants électriques (76) et/ou un collecteur de chaleur solaire (55) relié aux sacs empilés (70) par des tubes (78) d'échange de chaleur.

7. Dispositif d'accumulation de chaleur selon la revendication 6, caractérisé par une plaque de support conductrice de la chaleur portant les sacs (70) et présentant des cavités allongées (80) recevant les éléments chauffants électriques (76) et/ou les tubes (78) d'échangeur de chaleur.

8. Dispositif d'accumulation de chaleur selon au moins l'une des revendications précédentes, caractérisé par une chambre sensiblement creuse (38) et par un dispositif de circulation d'air qui provoque un écoulement d'air dans ladite chambre afin d'éliminer la chaleur desdits sacs.

### Patentansprüche

1. Wärmespeichervorrichtung insbesondere für einen Kamin, mit einem in wärmeleitender Beziehung zu wenigstens einer Wärmequelle, insbesondere dem Feuerkasten eines Kamins und/oder den Abzugsleitungen desselben, angeordneten, eine hohe spezifische Wärme aufweisenden Wärmespeichermaterial, dadurch gekennzeichnet, daß das Wärmespeichermaterial in einer Anzahl von übereinandergestapelten Beuteln (70) aus einem eine gute Wärmeleitfähigkeit aufweisenden Material enthalten ist.

2. Wärmespeichervorrichtung nach Anspruch 1, dadurch gekennzeichnet, daß die Beutel (70) aus metallischer Folie sind.

3. Wärmespeichervorrichtung nach Anspruch 1 und 2, dadurch gekennzeichnet, daß die metallische Folie eloxiert oder gefärbt ist, um Wärme wirksam zu absorbieren und abzustrahlen.

4. Wärmespeichervorrichtung nach wenigstens einem der vorstehenden Ansprüche, dadurch gekennzeichnet, daß in die Beutel (70) Wärmeverteilerelemente (74) eingesetzt sind, um die Wärmeübertragung von den Beuteln auf das die hohe spezifische Wärme aufweisende Material (72) zu verbessern.

5. Wärmespeichervorrichtung nach wenigstens einem der vorstehenden Ansprüche in Verbindung mit dem Feuerkasten eines Kamins als erster Wärmequelle, dadurch gekennzeichnet, daß wenigstens eine zusätzliche Wärmequelle (76 bzw. 55) in wärmeleitender Beziehung zu den Beuteln (70) angeordnet ist.

6. Wärmespeichervorrichtung nach Anspruch 5, dadurch gekennzeichnet, daß die zusätzliche Wärmequelle eine Anordnung von elektrischen Heizelementen (76) und/oder ein über Wärmetauscherrohre (78) mit den aufgestapelten Beuteln (70) verbundener Sonnenwärmekollektor (55) ist.

7. Wärmespeichervorrichtung nach Anspruch 6, dadurch gekennzeichnet, daß eine die Beutel (70) tragende wärmeleitende Tragplatte langgestreckte Hohlräume (80) für die Aufnahme der elektrischen Heizelemente (76) und/oder der Wärmetauscherrohre (78) aufweist.

8. Wärmespeichervorrichtung nach wenigstens einem der vorstehenden Ansprüche, gekennzeichnet durch eine im wesentlichen hohle Kammer (38) und durch Luft-Fördereinrichtungen zum Erzeugen eines Luftstroms durch die Kammer für die Abfuhr von Wärme von den Beuteln.

# Fig. 1

Fig.3

Fig.2

40

38

13

12

14

20

54 70 72

120VAC

52

24

28

38

40 44 50 42

70

72

26

20

14

12

22b

22a

18

30

31

0 004 058

# Fig.4

# Fig.5

0004058

# Fig.6

# Fig.7